# EUROPEAN PATENT APPLICATION

(11) **EP 4 776 122 A1**
(43) Date of publication of application: **15.07.2026**
(21) Application number: 25203388.1
(22) Date of filing: 19.09.2025
(51) Int. Cl.: G06F 8/41, G06F 8/51, G06F 8/73, G06F 8/74, G06N 3/0475, G06N 20/00, G06F 8/30

(54) **GENERATION OF PROMPTS FOR GENERATIVE ARTIFICIAL INTELLIGENCE MODEL USING CONTEXTUAL INFORMATION FROM LEGACY SOURCE CODE**

(30) Priority: 09.01.2025 IN 202521002123
(71) Applicant: Tata Consultancy Services Limited, Mumbai, Maharashtra 400 021 (IN)
(72) Inventor: RAVINDRANATH, Yogananda, 600119 Chennai, Tamil Nadu (IN); MEHALINGAM, Tamildurai, 600119 Chennai, Tamil Nadu (IN); NAGAPUNDU, Shiva Kumar, 600119 Chennai, Tamil Nadu (IN); CHINTHAMANI, Renganayagi, 600119 Chennai, Tamil Nadu (IN); AMBALAVANAN, Arunachalam, 600119 Chennai, Tamil Nadu (IN); SANTHANA KRISHNAN, Navaneetha Krishnan, 600119 Chennai, Tamil Nadu (IN)
(74) Representative: Goddar, Heinz J.

(57) **Abstract**

Usage of generative artificial intelligence (GenAI) models require appropriate prompts that describe a task to be completed. Conventionally complexities of large sizes and monolithic nature of input code are difficult for handling. The present disclosure resolves problems of conventional approaches by providing a system and method for generation of prompts for GenAI model using contextual information from legacy source code. The method of the present disclosure extracts relevant information from the legacy source code as context in natural language form which is provided as input to create the prompts required to enable successful usage of the GenAI model in multiple tasks of code analysis. In the present disclosure, information from legacy application code about business domain is extracted. Input legacy source code is parsed, and technical explanation is provided by handling the syntax and semantics of language. The legacy source code is split logically into blocks of manageable units.

## Description

### CROSS-REFERENCE TO RELATED APPLICATIONS AND PRIORITY

The present application claims priority to Indian application no. 202521002123, filed on January 9, 2025.

### TECHNICAL FIELD

The disclosure herein generally relates to the field of coding, and, more particularly, to methods and systems for generation of prompts for generative artificial intelligence model using contextual information from legacy source code.

### BACKGROUND

In recent times, generative artificial intelligence (Gen AI) has emerged as a key technology area for multiple applications in multiple industries. However, Usage of generative AI models such as large language models (LLM) require appropriate prompts that describe a task to be completed. For instance, while considering the task of creating summary for an IBM^{®} common business-oriented language (COBOL) program in a legacy application, each program would have complexity of COBOL syntax, intricacies of underlying domain of enterprise application and also its monolithic nature. Existing models and technologies just take user input from a subject matter expert (SME) or directly try to consume source code as input to the LLM and try generating a code summary and related tasks. However, dependency on the SME is a big bottleneck. SMEs generally are not available or not able to scale to expectations in which a Transformation roadmap would be expected. Further, options to directly consume the source code are not possible in case of a large code which spans for thousands of lines due to existing token limitations for using a GenAI model. Existing methods also do not handle complexities of large size and monolithic nature of the input code, business domain of the code, and understanding syntax and semantics of the input code (specifically in cases of legacy code like IBM COBOL).

### SUMMARY

Embodiments of the present disclosure present technological improvements as solutions to one or more of the above-mentioned technical problems recognized by the inventors in conventional systems. For example, in one embodiment, a processor implemented method is provided. The processor implemented method, comprising: receiving, via one or more hardware processors, one or more source codes pertaining to one or more software applications as an input; analyzing, via the one or more hardware processors, the one or more source codes using one or more parser tools to extract a plurality of informative data, wherein the plurality of informative data comprises at least one of (i) a first set of data obtained from a control flow analysis, (ii) a second set of data obtained from a data flow analysis, and (iii) a third set of data obtained from a detailed analysis of one or more statements comprised in each of a plurality of programs of each of the one or more source codes, wherein the plurality of informative data is organized for each of the plurality of programs into a set of persistent data files which are fed back into a database; translating, via the one or more hardware processors, each variable comprised in a specific data file from the set of persistent data files using a deep learning model to a predefined target variable format to obtain a set of translated programs for each of the one or more source codes; splitting, via the one or more hardware processors, each of the plurality of programs for each of the one or more source codes into a plurality of logical code blocks based on a plurality of parameters associated with the plurality of informative data and the set of translated programs such that an inter block communication amongst the plurality of logical code blocks is identified; generating, via the one or more hardware processors, a pseudocode for each of plurality of logical code blocks for each of the plurality of programs for each of the one or more source codes, wherein the pseudocode for each of plurality of logical code blocks represents a prompt in a natural language that captures contextual information from the one or more source codes pertaining to one or more software applications; and performing, via the one or more hardware processors, one or more tasks related to the one or more software applications using the pseudocode for each of plurality of logical code blocks inputted to a generative Artificial intelligence (Gen AI) model.

**In** another aspect, a system is provided. The system comprising a memory storing instructions; one or more Input/Output (I/O) interfaces; and one or more hardware processors coupled to the memory via the one or more I/O interfaces, wherein the one or more hardware processors (104) are configured by the instructions to: receive one or more source codes pertaining to one or more software applications as an input; analyze the one or more source codes using one or more parser tools to extract a plurality of informative data, wherein the plurality of informative data comprises at least one of (i) a first set of data obtained from a control flow analysis, (ii) a second set of data obtained from a data flow analysis, and (iii) a third set of data obtained from a detailed analysis of one or more statements comprised in each of a plurality of programs of each of the one or more source codes, wherein the plurality of informative data is organized for each of the plurality of programs into a set of persistent data files which are fed back into a database; translate each variable comprised in a specific data file from the set of persistent data files using a deep learning model to a predefined target variable format to obtain a set of translated programs for each of the one or more source codes; split each of the plurality of programs for each of the one or more source codes into a plurality of logical code blocks based on a plurality of parameters associated with the plurality of informative data and the set of translated programs such that an inter block communication amongst the plurality of logical code blocks is identified; generate a pseudocode for each of plurality of logical code blocks for each of the plurality of programs for each of the one or more source codes, wherein the pseudocode for each of plurality of logical code blocks represents a prompt in a natural language that captures contextual information from the one or more source codes pertaining to one or more software applications; and perform one or more tasks related to the one or more software applications using the pseudocode for each of plurality of logical code blocks inputted to a generative Artificial intelligence (Gen AI) model.

In yet another aspect, a non-transitory computer readable medium is provided. The non-transitory computer readable medium are configured by instructions for providing receiving one or more source codes pertaining to one or more software applications as an input; analyzing the one or more source codes using one or more parser tools to extract a plurality of informative data, wherein the plurality of informative data comprises at least one of (i) a first set of data obtained from a control flow analysis, (ii) a second set of data obtained from a data flow analysis, and (iii) a third set of data obtained from a detailed analysis of one or more statements comprised in each of a plurality of programs of each of the one or more source codes, wherein the plurality of informative data is organized for each of the plurality of programs into a set of persistent data files which are fed back into a database; translating each variable comprised in a specific data file from the set of persistent data files using a deep learning model to a predefined target variable format to obtain a set of translated programs for each of the one or more source codes; splitting each of the plurality of programs for each of the one or more source codes into a plurality of logical code blocks based on a plurality of parameters associated with the plurality of informative data and the set of translated programs such that an inter block communication amongst the plurality of logical code blocks is identified; generating a pseudocode for each of plurality of logical code blocks for each of the plurality of programs for each of the one or more source codes, wherein the pseudocode for each of plurality of logical code blocks represents a prompt in a natural language that captures contextual information from the one or more source codes pertaining to one or more software applications; and performing one or more tasks related to the one or more software applications using the pseudocode for each of plurality of logical code blocks inputted to a generative Artificial intelligence (Gen AI) model.

In accordance with an embodiment of the present disclosure, the set of persistent data files comprises at least one of a program file, a control flow graph file, a data flow file, a statement file, and a variable file.

In accordance with an embodiment of the present disclosure, each of the set of persistent data files comprises a specific structure and a plurality of elements in the specific structure, and wherein the specific structure enables capturing one or more properties of the plurality of elements and a relationship amongst the set of persistent data files.

In accordance with an embodiment of the present disclosure, the inter block communication amongst the plurality of logical code blocks is indicative of a relationship amongst each of the plurality of logical code blocks.

In accordance with an embodiment of the present disclosure, the relationship amongst each of the plurality of logical code blocks is based on at least one of one or more variable handling scenarios and one or more program structure dependency scenarios.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary block diagram of a system for generation of prompts for generative artificial intelligence (GenAI) model using contextual information from legacy source code, in accordance with some embodiments of the present disclosure.
FIG. 2 illustrates an exemplary flow diagram illustrating a method for generation of prompts for the GenAI model using contextual information from legacy source code, using the system of FIG. 1, in accordance with some embodiments of the present disclosure.
FIG. 3 depicts a block diagram representing organization of informative data into the set of persistent data files for generation of prompts for the GenAI model using contextual information from legacy source code, in accordance with some embodiments of the present disclosure.
FIG. 4 depicts a diagram illustrating splitting of a large program into blocks for the generation of prompts for the GenAI model using contextual information from legacy source code, according to some embodiments of the present disclosure.
FIG. 5 depicts a diagram illustrating classification of blocks based on structure for the generation of prompts for the GenAI model using contextual information from legacy source code, according to some embodiments of the present disclosure.
FIG. 6 depicts a diagram illustrating classification of blocks based on composition for the generation of prompts for the GenAI model using contextual information from legacy source code, according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following embodiments described herein.

Usage of Generative Artificial Intelligence (GenAI) models such as large language models (LLM) require appropriate prompts that describe a task to be completed. For instance, while considering the task of creating summary for a IBM^{®} COBOL program in a legacy application, each program would have complexity of COBOL syntax, intricacies of underlying domain of enterprise application and also its monolithic nature. Existing models and technologies just take user input from a subject matter expert (SME) or directly try to consume source code as input to the LLM and try generating a code summary and related tasks. However, dependency on the SME is a big bottleneck. SME generally are not available or not able to scale to expectations in which a Transformation roadmap would be expected. Further, options to directly consume the source code are not possible in case of a large code which spans for thousands of lines due to existing token limitations for using a GenAI model. Existing methods also do not handle complexities of large size and monolithic nature of the input code, business domain of the code, and understanding syntax and semantics of the input code (specifically in cases of legacy code like IBM COBOL).

Embodiments of the present disclosure resolve the problems of the conventional approaches by providing a system and method for generation of prompts for the GenAI model using contextual information from legacy source code. The present disclosure extracts relevant information from the code as context in natural language form which can be provided as input to create the prompts required to enable successful usage of GenAI in multiple tasks of code analysis. These tasks may include but are not limited to business rules extraction, code summarization, target language code generation, and/or the like. In the method of the present disclosure, information from Legacy application code is extracted and the code is split logically into blocks of manageable units. Information about business domain is provided, input code (like IBM COBOL) is parsed and technical explanation is provided by handling the syntax and semantics of the language.

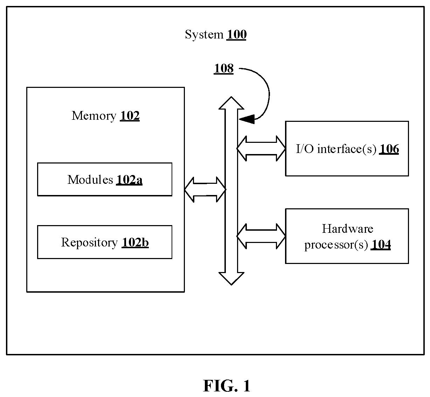

Referring now to the drawings, and more particularly to FIGS. 1 through 6, where similar reference characters denote corresponding features consistently throughout the figures, there are shown preferred embodiments, and these embodiments are described in the context of the following exemplary system and/or method.

FIG. 1 illustrates an exemplary block diagram of a system for generation of prompts for Generative Artificial Intelligence (GenAI) model using contextual information from legacy source code, in accordance with some embodiments of the present disclosure.

In an embodiment, the system 100 includes or is otherwise in communication with one or more hardware processors 104, communication interface device(s) or input/output (I/O) interface(s) 106, and one or more data storage devices or memory 102 operatively coupled to the one or more hardware processors 104. The one or more hardware processors 104, the memory 102, and the I/O interface(s) 106 may be coupled to a system bus 108 or a similar mechanism.

The I/O interface(s) 106 may include a variety of software and hardware interfaces, for example, a web interface, a graphical user interface, and the like. The I/O interface(s) 106 may include a variety of software and hardware interfaces, for example, interfaces for peripheral device(s), such as a keyboard, a mouse, an external memory, a plurality of sensor devices, a printer and the like. Further, the I/O interface(s) 106 may enable the system 100 to communicate with other devices, such as web servers and external databases.

The I/O interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 106 may include one or more ports for connecting a number of computing systems with one another or to another server computer. Further, the I/O interface(s) 106 may include one or more ports for connecting a number of devices to one another or to another server.

The one or more hardware processors 104 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In the context of the present disclosure, the expressions 'processors' and 'hardware processors' may be used interchangeably. In an embodiment, the system 100 can be implemented in a variety of computing systems, such as laptop computers, portable computer, notebooks, hand-held devices, workstations, mainframe computers, servers, a network cloud and the like.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 102 includes a plurality of modules 102a and a repository 102b for storing data processed, received, and generated by one or more of the plurality of modules 102a. The plurality of modules 102a may include routines, programs, objects, components, data structures, and so on, which perform particular tasks or implement particular abstract data types.

The plurality of modules 102a may include programs or computer-readable instructions or coded instructions that supplement applications or functions performed by the system 100. The plurality of modules 102a may also be used as signal processor(s), state machine(s), logic circuitries, and/or any other device or component that manipulates signals based on operational instructions. Further, the plurality of modules 102a can be used by hardware, by computer-readable instructions executed by the one or more hardware processors 104, or by a combination thereof. Further, the memory 102 may include information pertaining to input(s)/output(s) of each step performed by the processor(s) 104 of the system 100 and methods of the present disclosure.

The repository 102b may include a database or a data engine. Further, the repository 102b amongst other things, may serve as a database or includes a plurality of databases for storing the data that is processed, received, or generated as a result of the execution of the plurality of modules 102a. Although the repository 102b is shown internal to the system 100, it will be noted that, in alternate embodiments, the repository 102b can also be implemented externally to the system 100, where the repository 102b may be stored within an external database (not shown in FIG. 1) communicatively coupled to the system 100. The data contained within such an external database may be periodically updated. For example, new data may be added into the external database and/or existing data may be modified and/or non-useful data may be deleted from the external database. In one example, the data may be stored in an external system, such as a Lightweight Directory Access Protocol (LDAP) directory and a Relational Database Management System (RDBMS). In another embodiment, the data stored in the repository 102b may be distributed between the system 100 and the external database.

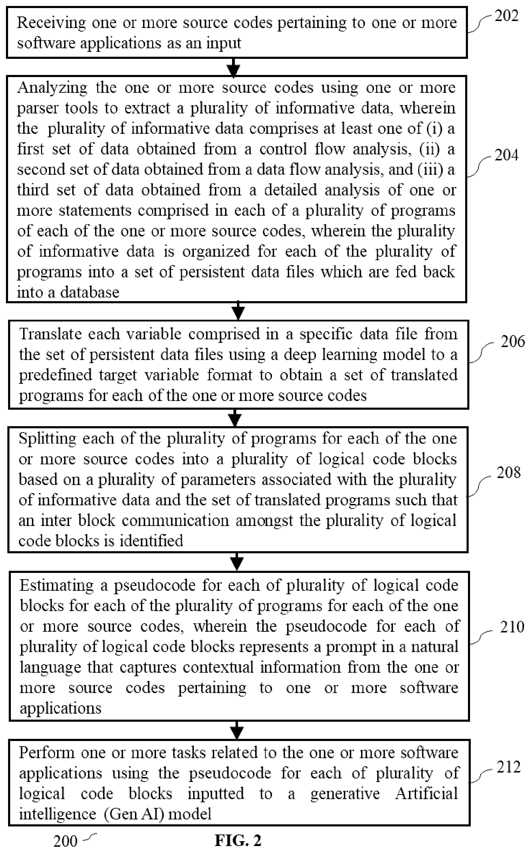

FIG. 2 illustrates an exemplary flow diagram illustrating a method for generation of prompts for the GenAI model using contextual information from legacy source code, using the system of FIG. 1, in accordance with some embodiments of the present disclosure.

Referring to FIG. 2, in an embodiment, the system 100 comprises one or more data storage devices or the memory 102 operatively coupled to the one or more hardware processors 104 and is configured to store instructions for execution of steps of the method by the one or more processors 104. The steps of the method 200 of the present disclosure will now be explained with reference to components of the system 100 of FIG. 1, the flow diagram as depicted in FIG. 2, and one or more examples. Although steps of the method 200 including process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

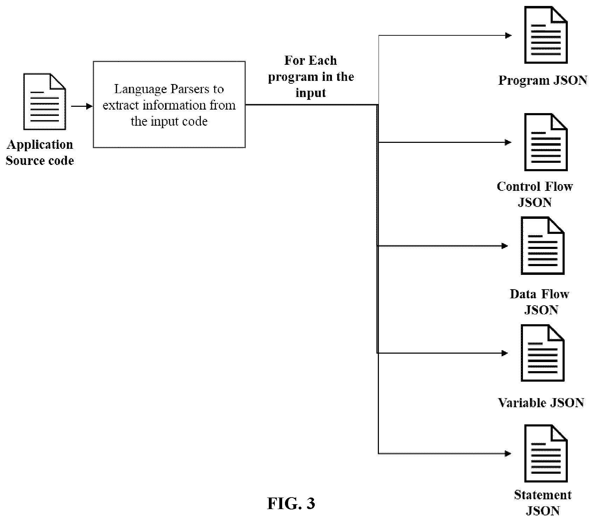

In an embodiment, at step 202 of the present disclosure, the one or more hardware processors 104 are configured to receive one or more source codes pertaining to one or more software applications as an input. In an embodiment, the one or more source codes represent legacy source codes. Further, at step 204 of the present disclosure, the one or more hardware processors 104 are configured to analyze the one or more source codes using one or more parser tools to extract a plurality of informative data. The plurality of informative data comprises at least one of (i) a first set of data obtained from a control flow analysis, (ii) a second set of data obtained from a data flow analysis, and (iii) a third set of data obtained from a detailed analysis of one or more statements comprised in each of a plurality of programs of each of the one or more source codes. In an embodiment, the plurality of informative data is organized for each of the plurality of programs into a set of persistent data files which are fed back into a database. The set of persistent data files comprises at least one of a program file, a control flow graph file, a data flow file, a statement file, and a variable file. In an embodiment, each of the set of persistent data files comprises a specific structure and a plurality of elements in the specific structure. The specific structure enables capturing one or more properties of the plurality of elements and a relationship among the set of persistent data files. FIG. 3 depicts a block diagram representing organization of informative data into the set of persistent data files for generation of prompts for the GenAI model using contextual information from legacy source code, in accordance with some embodiments of the present disclosure. As shown in FIG. 3, the one or more source codes are inputted into a language parser for information extraction. Further, the extracted information for each program from the one or more source codes is stored into a program JavaScript Object Notation (JSON) File, a control flow JSON File, a data flow JSON file, a variable JSON file, and a statement JSON file.

In an embodiment, the Program JSON file decodes a structure of an input program. For instance, in a COBOL program, there are different sections of code. The actual programming logic starts from the PROCEDURE DIVISION and would be segregated into different sections/paragraphs. The Program JSON file extracts and holds information of this structure and different sections/paragraphs where actual statement is part of. In this step itself, the copybooks that are provided as input are also expanded and the program JSON file exactly replicates expanded form of the structure of each input program. A Sample snippet from a program JSON is provided below:

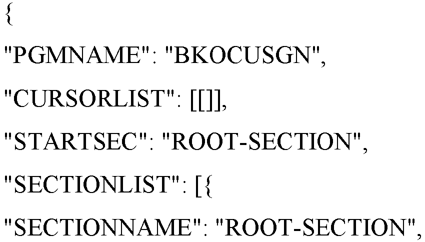

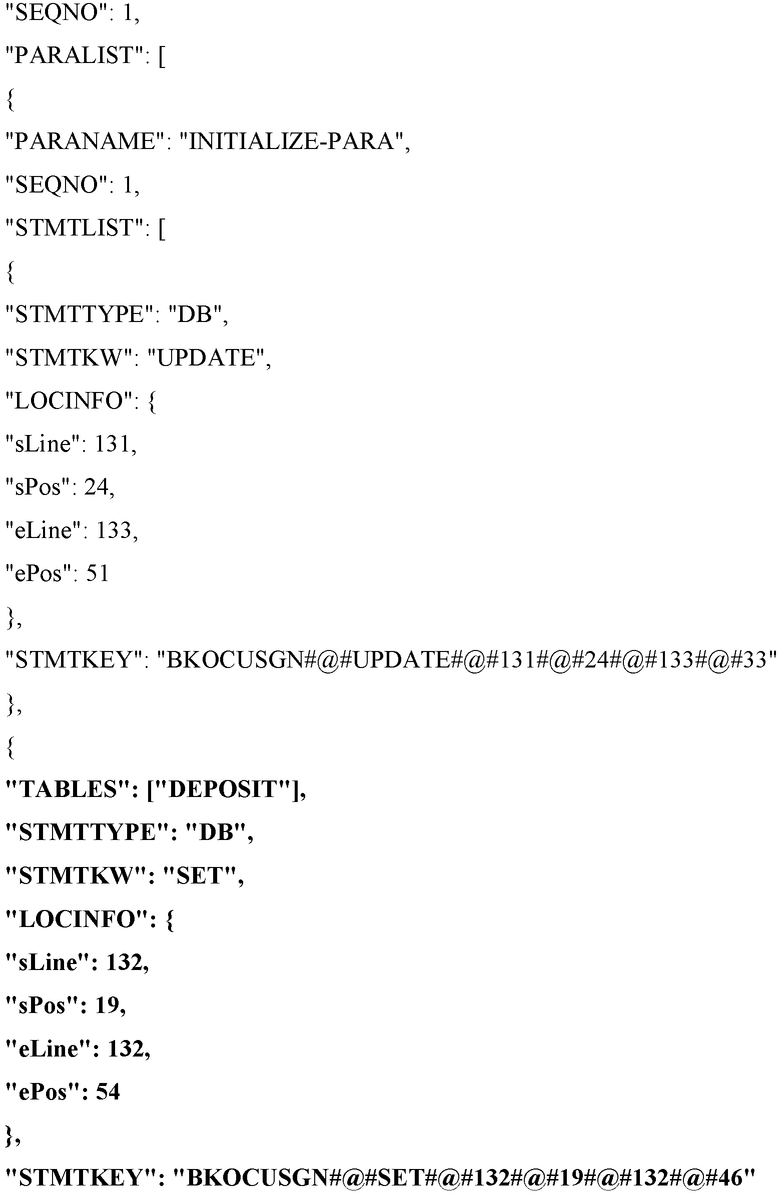

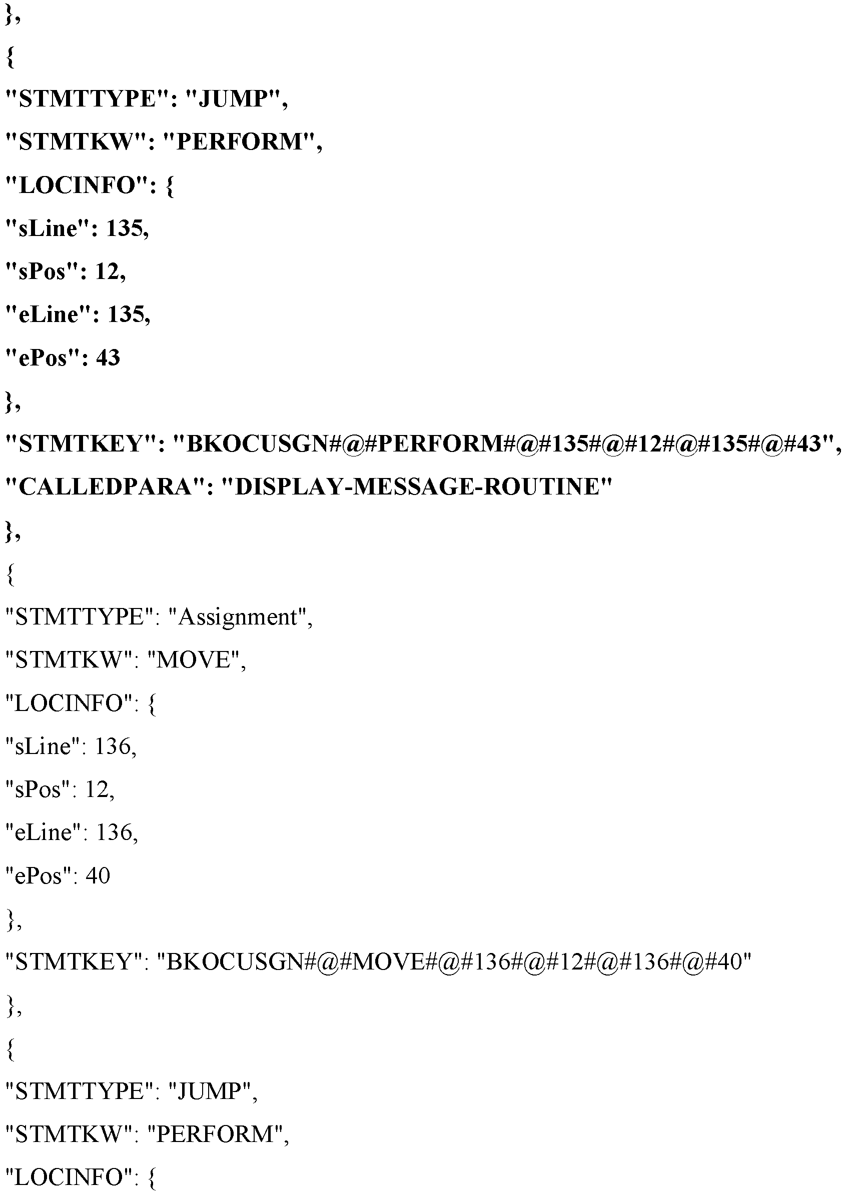

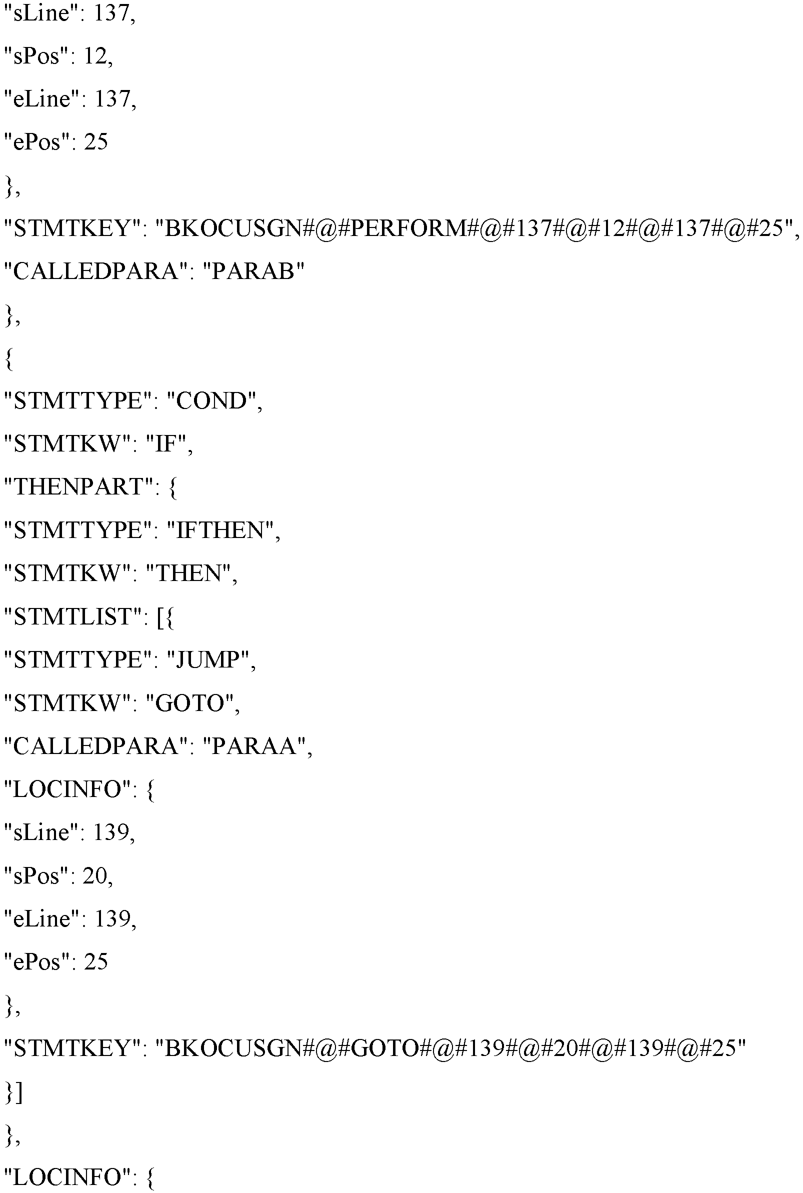

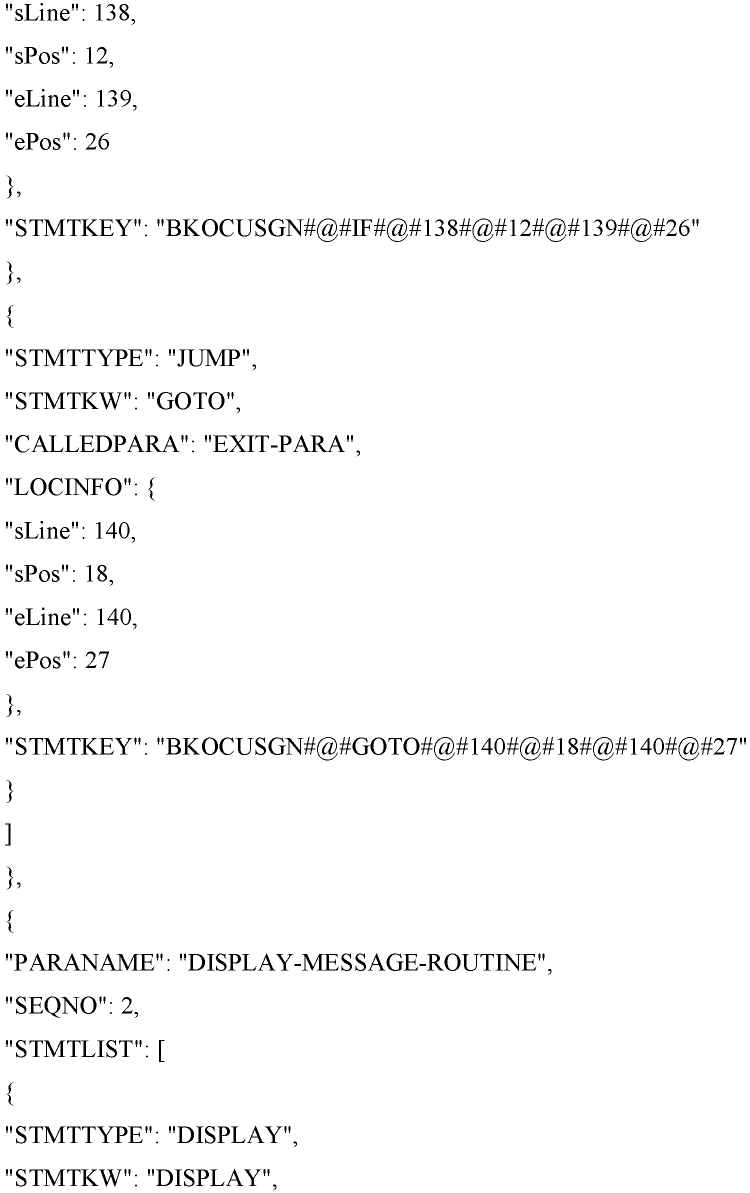

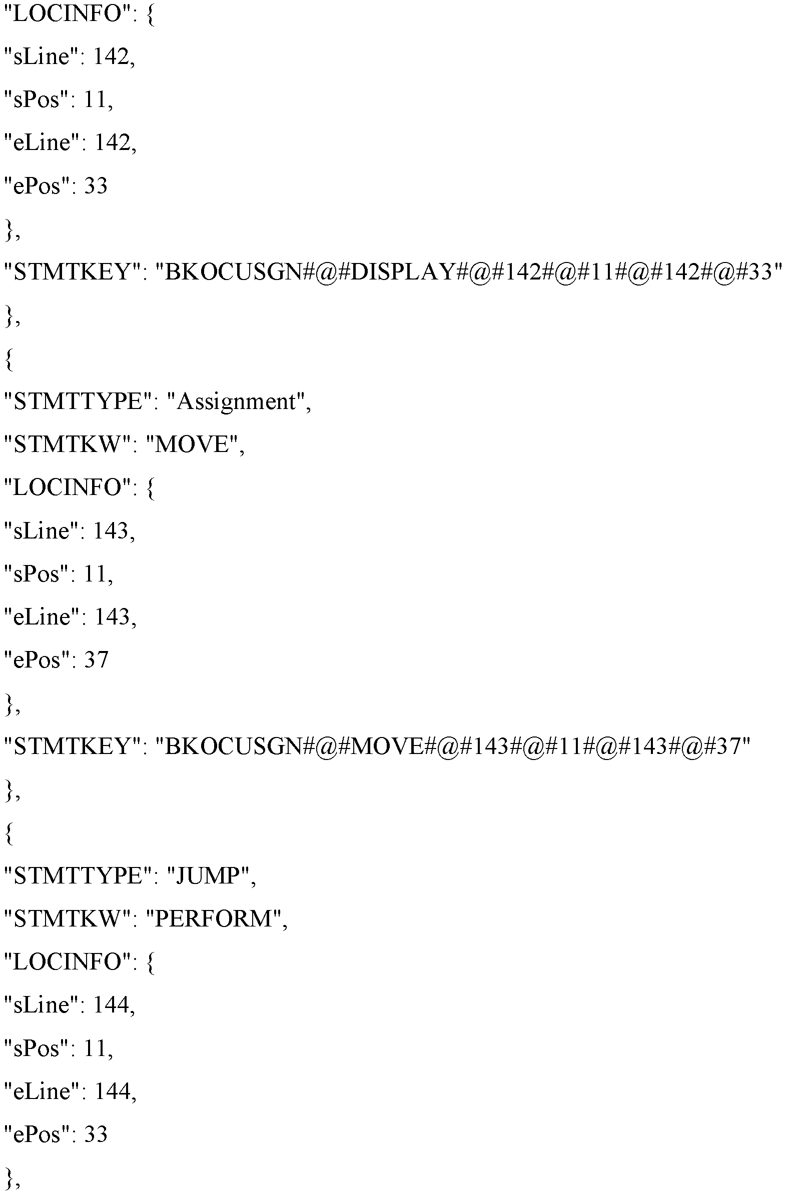

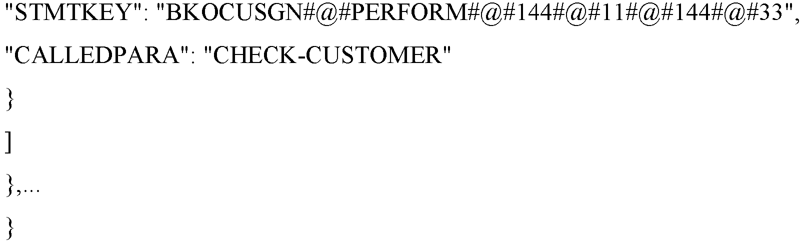

In an embodiment, the control flow graph (CFG) JSON creation looks for statements that transfer control from one statement to other statement and expands them in one single flow. For instance, a COBOL program can have a PERFORM statement, PERFORM THRU statement, GO TO statement, GO BACK statement, STOP RUN statement and the like. Each statement has a different type in which the control is transferred from a particular statement in the source code to the next statement and has different properties of how the control is returned. The CFG JSON expands all such statements and creates sequencing of statements that would replicate the code's execution flow. While trying to give the program/the code directly as an input to the LLM, this resolution might not work as expected and is a differentiator. For example, the bold text present in the program JSON would in turn be expanded as below in the CFG JSON

```
 {
 "TABLES": ["DEPOSIT"],
 "STMTTYPE": "DB",
 "STMTKW": "SET",
 "LOCINFO": {
 "sLine": 132,
 "sPos": 19,
 "eLine": 132,
 "ePos": 54
 },
 "STMTKEY": "BKOCUSGN#@#SET#@#132#@#19#@#132#@#46"
 },
 {
 "TAG": "PARASTART",
 "TAGNAME": "DISPLAY-MESSAGE-ROUTINE"
 },
 {
 "STMTTYPE": "DISPLAY",
 "STMTKW": "DISPLAY",
 "LOCINFO": {
 "sLine": 142,
 "sPos": 11,
 "eLine": 142,
 "ePos": 33
 },
 "STMTKEY": "BKOCUSGN#@#DISPLAY#@#142#@#11#@#142#@#33"
 },
 {
 "STMTTYPE": "Assignment",
 "STMTKW": "MOVE",
 "LOCINFO": {
 "sLine": 143,
 "sPos": 11,
 "eLine": 143,
 "ePos": 37
 },
 "STMTKEY": "BKOCUSGN#@#MOVE#@#143#@#11#@#143#@#37"
 },..
 }
```

In embodiment, like the control flow information, the data of variable is also moved from one statement to another statement based on execution flow and each variable will have its own trace of source from which it was created or initially got its value and how it got processed and how it was used. The data flow JSON (DFG JSON) extracts and holds information of each variable instance in each statement. A sample snippet from the DFG JSON is provided below:

```
 {
 "VARNAME": "CUSTOMER-NAME",
 "QUALIFIER": "DCLCUSTOMER\\CUSTOMER-NAME",
 "STMTKEY": "BKXTRFMO#@#Move#@#512#@#11#@#512#@#48",
 "SOURCEVARS": [{
 "VARNAME": "L-CUSTOMER-NAME",
 "QUALIFIER": "CUSTOMER\\L-CUSTOMER-NAME",
 "MODIFIERVARS": [{
 "VARNAME": "L-CUSTOMER-NAME",
 "QUALIFIER": "CUSTOMER\\L-CUSTOMER-NAME",
 "STMTKEY": "BKXTRFMO#@#Move#@#269#@#20#@#269#@#72",
 "SOURCEVARS": [{
 "VARNAME": "IN-CUSTOMER-NAME",
 "QUALIFIER": "IN-FILEREC\\IN-CUSTOMER-NAME",
 "MODIFIERVARS": [{
   "VARNAME": "IN-FILEREC",
 "QUALIFIER": "IN-FILEREC",
 "STMTKEY": "BKXTRFMO#@#READ#@#265#@#15#@#276#@#23"
 }]
 }]
 }]
 }]
 }
```

In the above sample snippet, the CUSTOMER-NAME variable which is part of MOVE statement, gets its original value from the record in the file with logical name .IN-FILEREC. through the READ statement.

In an embodiment, the variable JSON holds the meta data of each variable that is part of component. The data may include information such as variable datatype, size, name, and if it is a COBOL variable information like level number, occurs from, start position, end position, and/or the like. A sample snippet from the variable JSON is provided below:

```
 "DILIST": [
 {
 "symbolJSON": {
 "level": "01",
 "di_id": 1,
 "startLineNo": 27,
 "varname": "IN-FILEREC",
 "qulName": "IN-FILEREC",
 "businessTerm": "IN-FILEREC",
 "diKey": "BKOCUSGN.COB#@#IN-FILEREC#@#IN-FILEREC",
 "locationInfo": "27#@#31#@#7#@#49",
 "picstring": "",
 "datatype": "ALPHANUMERIC",
 "size": 82,
 "length": 82,
 "declength": 0,
 "offset": 0,
 "symbolSignedFlag": false,
 "var_type": "P",
 "levelinitialValue": [],
 "usage": "",
 "redefineflag": "",
 "arrayflag": "",
 "redefinevarname": "",
 "arrayfromcount": "",
 "arraytocount": "",
 "data_def_type": "F",
 "filename": "IN-FILE",
 "symbolOtherJSON": [
 {
 "level": "10",
 "di_id": 2,
 "startLineNo": 28,
 "varname": "IN-CUSTOMER-NAME",
 "qulName": "IN-FILEREC\\IN-CUSTOMER-NAME",
 "businessTerm": "IN-CUSTOMER-NAME",
 "diKey": "BKOCUSGN.COB#@#IN-FILEREC\\IN-CUSTOMER-NAME#@#IN-
 CUSTOMER-NAME",
 "locationInfo": "28#@#28#@#10#@#49",
 "picstring": "X(60)",
 "datatype": "ALPHANUMERIC",
 "size": 60,
 "length": 60,
 "declength": 0,
 "offset": 0,
 "symbolSignedFlag": false,
 "var_type": "P",
 "levelinitialValue": [],
 "usage": "",
 "redefineflag": "",
 "arrayflag": "",
 "redefinevarname": "",
 "arrayfromcount": "",
 "arraytocount": "",
 "data_def_type": "F",
 "filename": "IN-FILE",
 "expoffset": 0,
 "GroupORElementary": "E"
 },
 {
 "level": "10",
 "di_id": 3,
 "startLineNo": 29,
 "varname": "IN-ACCT-TYP",
 "qulName": "IN-FILEREC\\IN-ACCT-TYP",
 "businessTerm": "IN-ACCT-TYP",
 "diKey": "BKOCUSGN.COB#@#IN-FILEREC\\IN-ACCT-TYP#@#IN-ACCT-
 TYP",
 "locationInfo": "29#@#29#@#10#@#45",
 "picstring": "X",
 "datatype": "ALPHANUMERIC",
 "size": 1,
 "length": 1,
 "declength": 0,
 "offset": 60,
 "symbol SignedFlag": false,
 "var_type": "P",
 "levelinitialValue": [],
 "usage": "",
 "redefineflag": "",
 "arrayflag": "",
 "redefinevarname": "",
 "arrayfromcount": "",
 "arraytocount": "",
 "data_def_type": "F",
 "filename": "IN-FILE",
 "expoffset": 60,
 "GroupORElementary": "E"
 },...
   }
```

The statement JSON holds the meta data and content of each statement that is part of component. The data may include information such as statement keyword, used variables, modified variables, and/or the like. Each statement is uniquely identified through a key that is referred to and used to extract a statement when required. The key is created by Component Name + Statement Keyword Text + Start Line Number + Start Position + End Line Number + End Position. A sample snippet from the statement JSON is provided below:

```
 {
 "STMTLIST": [
 {
 "category": "DB",
 "subCategory": "UPDATE",
 "stmtKey": "BKOCUSGN#@#UPDATE#@#131#@#24#@#133#@#51",
 "sline": 131,
 "eline": 133,
 "stmtText": "UPDATE DEPOSIT SET INTEREST = INTEREST + :INTEREST
 WHERE ACID = :DEPOSIT-ACCOUNT-ID",
 "TABLES": ["DEPOSIT"]
 },
 {
 "category": "DB",
 "subCategory": "SET",
 "stmtKey": "BKOCUSGN#@#SET#@#132#@#19#@#132#@#54",
 "sline": 132,
 "eline": 132,
 "stmtText": "SET INTEREST = INTEREST + :INTEREST"
 },
 {
 "category": "Call",
 "subCategory": "Perform",
 "stmtKey": "BKOCUSGN#@#Perform#@#135#@#12#@#135#@#43",
 "pgmname": "DISPLAY-MESSAGE-ROUTINE",
 "sline": 135,
 "eline": 135,
 "stmtText": "PERFORM DISPLAY-MESSAGE-ROUTINE"
 },...
 }
```

At step 206 of the present disclosure, the one or more hardware processors 104 are configured to translate each variable comprised in a specific data file from the set of persistent data files using a deep learning model to a predefined target variable format to obtain a set of translated programs for each of the one or more source codes. The predefined target variable format represents expansion of cryptic term variable name into a more meaningful term. The specific data file is the variable JSON file. In an embodiment, each variable that is part of the variable JSON is extracted and passed to the deep learning model using which the cryptic term variable name is expanded further into a more meaningful term. The information in the variable JSON is updated with business term(s) based on the created information. A sample example of the set of translated programs is provided below:

```
{
 "level": "10",
 "di_id": 4,
 "startLineNo": 30,
 "varname": "IN-CUID",
 "qulName": "IN-FILEREC\\IN-CUID",
 "businessTerm": "INPUT CUSTOMER ID",
 ...
```

Further, at step 208 of the present disclosure, the one or more hardware processors 104 are configured to split each of the plurality of programs for each of the one or more source codes into a plurality of logical code blocks based on a plurality of parameters associated with the plurality of informative data and the set of translated programs such that an inter block communication amongst the plurality of logical code blocks is identified. In an embodiment, the plurality of parameters associated with the plurality of informative data may include but are not limited to flow of components, information that is passed from one statement to next statement in execution flow, depth of a particular path in the execution flow, number of times a set of statements that are repeatedly called, and/or the like.

In an embodiment, the step 208 is further described by way of following exemplary explanation.

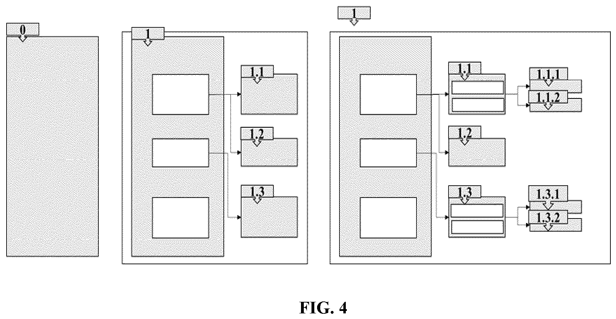

A program that was generated in languages like COBOL decades ago and evolved over the years due to business and regulatory needs is generally a large monolithic code by nature, where a functionality in the code within is tangled. With an expectation to modernize, the code needs to be split into blocks of codes that are functionally independent of each other and handle the appropriate data movement in between them. The splitting is done based on multiple parameters including but not limited to the execution flow within the components, the depth of a particular path in the execution flow, the number of times a set of statements is repeatedly called, and statement type such as an atomic statement or a compound statement, and handling copybooks expansion. FIG. 4 depicts a diagram illustrating the splitting of a large program into blocks for the generation of prompts for the GenAI model using contextual information from legacy source code, according to some embodiments of the present disclosure. As shown in FIG. 4, the large program is divided int blocks based on functionality. To understand the splitting of a large program into blocks, different elements within the large program are required to be understood. A program or class or section contains a sequence of connected statements which are blocks and there can be more than one blocks in a program. In an embodiment, a statement is an instruction given in a software program code to perform a task. These statements are further classified as atomic statement and compound statement. The atomic statement refers to the statement or instructions that do not have any other split or nested statements within their scope. For example, MOVE, DISPLAY, and/or the like. The compound statement refers to the statements which in turn have other valid statements within the scope. For example, IF statement, EVALUATE statement, PERFORM VARYING, and/or the like. A sample of the compound statement is below:

```
 IF A = B
   MOVE A TO A1
   ELSE
       MOVE A TO A2
       END-IF.
```

As shown in FIG. 4, a Program/Class/Section may have a group of blocks having different relationships with each other where there is at least one Entry block known as Block 0. Every block through a series of valid transformations gets reduced or creates blocks which can never be reduced further. The parameters involved in the transformations may include but are not limited to statements, data elements or variables, data elements or variable usage with respect to statement types, an associated scope, a sequence of execution, and the like. The transformations start by processing the CFG JSON as the input which provides the information about the execution flow, VARIABLE JSON which provides the information about each variable, the STATEMENT JSON which provides the details about the statements in the program. While iterating each element in the CFG JSON, the corresponding statement information is extracted from STATEMENT JSON and the variable information is extracted from the VARIABLE JSON. Additional parameters such as the items in depth or repeatability of the statements are also provided as a knowledge repository to split the blocks into a format that can never be reduced further as per definitions and parameters defined. A pseudocode describing splitting of the blocks is provided below: Block 0:

```
 .....................
 ......................
 INVOKE SUB LOGICAL BLOCK 3
 .......................
 INVOKE SUB LOGICAL BLOCK 2
 ...................
 BLOCK 1
 ............................
 ..............................
 BLOCK 2
 .......................
```

Block 0 starts as a main block. When there is a decision to further split a larger block into smaller sub blocks, information about where it is split, numbering for the same, and data that flows from this block to the next block is also maintained.

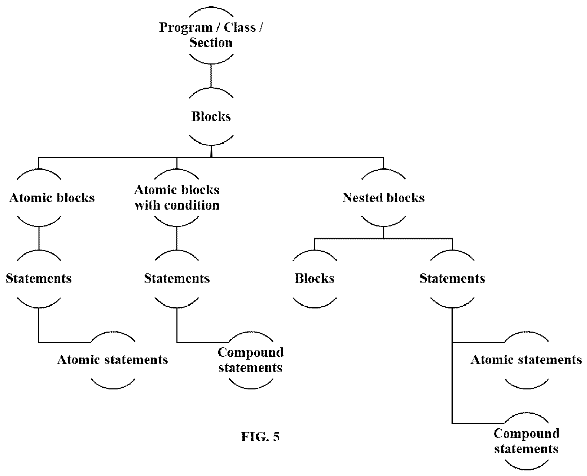

In an embodiment, a block is a sequence of statements or other nested blocks without any JUMP. Based on structure, blocks could be identified into different types such as atomic blocks including simple atomic blocks, atomic blocks with conditions, and nested blocks. FIG. 5 depicts a diagram illustrating classification of blocks based on structure for the generation of prompts for the GenAI model using contextual information from legacy source code, according to some embodiments of the present disclosure. Simple atomic blocks represent a set of physically sequenced simple statements. Atomic blocks can also be blocks with only one statement. The atomic blocks with conditions may have atleast one compound statements with no nesting or combination of both the atomic and non-nested compound statements. A nested block is a combination of one or more atomic or other nested blocks. Any block with at least one level of nesting is considered as nested block. The nested blocks always start with one condition as shown in pseudocode below:

```
       (IF1 + THEN) [Nested]
             (IF1.1 + THEN) [Conditional]
             (IF1.2 + ELSE) [Conditional]
      END IF
       (IF1 + THEN) [Conditional]
             PERFORM [Control Block]
             PERFORM [Control Block]
      END IF
```

When a conditional block contains only data blocks, then it is atomic & conditional block. When a conditional block contains any other blocks in it, it is NESTED. Anything other than the atomic block is classified as Nested Block.

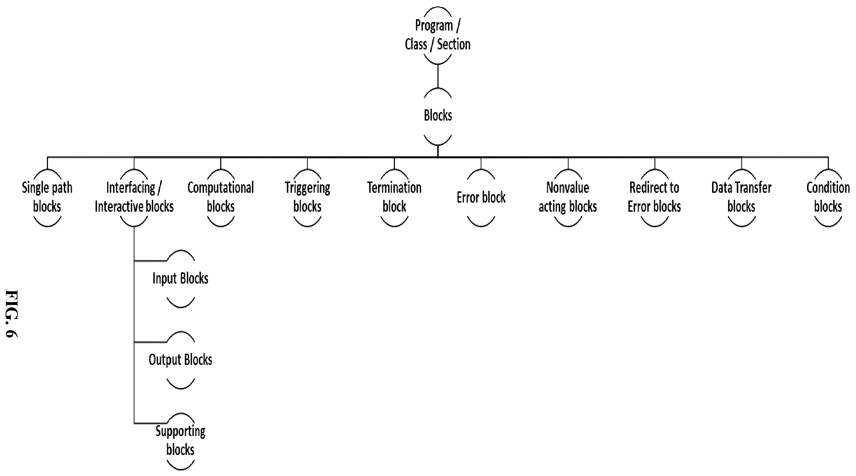

Based on content and the statements inside the block, the blocks are further classified based on their composition. FIG. 6 depicts a diagram illustrating classification of blocks based on composition for the generation of prompts for the GenAI model using contextual information from legacy source code, according to some embodiments of the present disclosure. As shown in FIG. 6, the type of blocks classified based on composition are single path blocks, interfacing/interactive blocks, computational blocks, triggering blocks or control blocks, termination block, non-value adding blocks, error blocks, redirection to error blocks, string manipulation blocks, data transfer blocks, and condition based blocks. The single path block represents a block that does not compose any control transfer statements within and executes in sequence from the first statement to the last statement. The interfacing/interactive blocks are further classified as input blocks, output blocks, and supporting blocks. The input block includes ACCEPT, READ, SELECT, RECEIVE, LINKAGE SECTION, and all File/DB/Screen based input received. The output blocks include DISPLAY, WRITE, REWRITE, SEND, UPDATE, DELETE statement blocks, and all File/DB/Screen based input received. The supporting blocks include OPEN/CLOSE statements, and ROLL BACK/ COMMIT. The computational block represents a block with arithmetic operations such as COMPUTE, ADD, SUBTRACT, DIVIDE, and MULTIPLY. The triggering block or control block represents a block that contains only a control transfer statement such as PERFORM, GO TO, CALL, CONTINUE, NEXT SENTENCE. Termination blocks are also a type of control transfer blocks but are classified separately. The termination block represents a block that contains a termination statement such as EXIT PROGRAM, STOP RUN, GO BACK, and/or the like or contains at-least one terminal block with in it. The termination blocks are further classified as possible terminal blocks, and definite terminal blocks. The possible terminal block refers to terminal blocks which have termination statements and other statements within them. The definite terminal block represents a block having at least one of (i) a single path ending with termination statement, or (ii) all paths leading to termination statements. The non-value adding blocks may include EXIT, EJECT, SKIP statement blocks. The error blocks are identified based on literal value analysis of the blocks. The redirection to error blocks includes ON ERROR statements and PERFORM statements inside such as (IF SQLCODE <> 0) blocks. The string manipulation blocks include STRING/UNSTRING/INSPECT such as STRING + WRITE. The data transfer blocks are composed of MOVE/SET/INITIALIZE. The condition based blocks contain compound statements with condition, and zero of many other nested blocks within. These are mainly driven by a main condition that defines the flow of control as shown in pseudocode below:

```
      IF
             (IF + THEN)
             (IF + ELSE)
      END IF
```

In an embodiment, a few scenarios where the splitting of the blocks and its transformations are used are provided below:
1. ADD/SUBTRACT/COMPUTE in scope of a LOOP statement with hardcoded increment/decrement most likely represents an iteration and is to be presented as a single block to start with. Based on the content within the loop, it gets further split into NESTED blocks, data blocks and based on number of statements in each block it gets split further.
2. FILE/ DB/Screen declarations blocks get segregated as data blocks holding variable declarations.
3. MOVE 'hardcoded' messages with large string messages to variables are most likely error/debug messages to be DISPLAYED/WRITTEN to a file. The block to be linked with the original block that consumes it like a WRITE FILE.
4. Terminating blocks in the nested scope (i.e., GO BACK, STOP RUN) have more significance in denoting larger block property.
5. 88 level flag checks and its action blocks (TRUE/FALSE part) might help to understand if the block really has any business significance or not and can be logically linked accordingly.
6. MOVE/SET OF MOVE statements which is an atomic block without nesting followed by a control block that could mean that earlier block prepares information for current control block. In such cases, both the blocks can combine to form a larger block.
7. COMPUTE may not always mean to have business impact
   a. It can be incremented/decremented
   b. It can be reporting/formatting/Page header level calculations
   c. Screen
8. COMPUTE with MULTIPLICATION is most likely business variables with financial could determine importance of a block.
9. SELECT followed by IF block where mostly the IF block will be a SQLCODE check. The IF statement and the SELECT statement logically represent same functionality and need to be grouped together.
10. CALL statement followed by conditional block is mostly checking return code from called component for further processing. They logically represent the same functionality and need to be grouped together.
11. Any reusable block across the programs referred more than once are to be referred to as common blocks/functions and the like.
The above scenarios are part of the knowledge that are used to generate the blocks and function together to provide the whole program/class to be split as blocks and maintain the relationships between them.

In an embodiment, the inter block communication amongst the plurality of logical code blocks is indicative of a relationship amongst each of the plurality of logical code blocks. The relationship between each of the plurality of logical code blocks is based on at least one of one or more variable handling scenarios and one or more program structure dependency scenarios. The inter block communication amongst the plurality of logical code blocks is identified based on at least one of a physical relationship and a logical relationship between the blocks. Table 1 below provides an example of the interlock communication based on physical relationship between the blocks.

**Table 1**

| **Type of Statement / Block** | **Description** | **Root** | **Leaf** | **Parent** | **Child** | **Ancestor** | **Desc.** |
|---|---|---|---|---|---|---|---|
| Root | Refers to the ENTRY statements/blocks in a program. | N/A | 1..n | N/A | 1..n | N/A | 1..n |
| | This node will never have a parent/ancestor | | | | | | |
| Leaf | Refers to a statement / block that does not have any further child statements/blocks with in | 1..1 | N/A | 1..1 | N/A | 1..n | N/A |
| Parent | While the above two terms are always true when you consider a program, the next four definitions are always relative. | 1..1 | 1..n | 1..1 | 1..n | 1..n | 1..n |
| | A statement / block is a Parent only to its immediate child/children. | | | | | | |
| Child | A statement / block is a Child only to its immediate parent. A child can have only one parent. | 1..1 | 1..n | 1..1 | 1..n | 1..n | 1..n |
| Ancestor | From a particular statement/block, all the statements / blocks in the hierarchy till the Root other than the parent are Ancestors | 1..1 | 1..n | 1..n | 1..n | 1..n | 1..n |
| Descendant | From a particular statement/block, all the statements / blocks in the hierarchy after the statement other than the child are Descendant | 1..1 | 1..n | 1..n | 1..n | 1..n | 1..n |

Based on the physical relationship between the blocks, the blocks can be further classified into mutually exclusive blocks, sibling blocks and co-occurring blocks. The mutually exclusive blocks refer to blocks that are logically exclusive to each other. Blocks that have the same compound statement as a parent. Only one of the blocks executes as per the logical sequence of executions. The sibling blocks refer to blocks that have same parent (which can be a compound statement or a root) and are not mutually exclusive. The co-occurring blocks refer to a specific section of sibling blocks that are always cooccurring such as SQL and SQLCODE check blocks, and/or the like. In an embodiment, any relation that is derived for relationships will be true for logical, but the converse is not true. In the physical relationship between the blocks, a child always executes within its parent or ancestor, certain properties of the child can be derived from its parent or ancestors, and Nesting Relations, Property Propagation or derivation are used.

The logical relationship between the block describes a relationship based on the execution and the relationship between the values that are moved. In the logical relationship between the blocks, a triggering block which is derived physically is always a predecessor (logical) of the triggered block (i.e., root block or Entry block of the triggered container). Be it the physical relationship or logical relationship, linkage between components of the one or more source codes is of less value without having information of the variable used in the blocks and its corresponding statements. Extraction of information from the variable may include but not restricted to information related to size, datatype, additional properties (existing) such as OCCURS, FILE, and DB, additional Properties (derived based on the statement) such as Used, Modified, and physical structure depicting position of the variable in variable structure (i.e., Offsets), logical relation including impacted offsets (if the variable is a modified variable), impact created on non-participating variable due to containment relations, and whether it is a copybook variable and where all is the copybook being used. A variable should have atleast one value from (a) value clause, (b) value clause (through its parent), (iii) a host variable where it receives value from table or file or screen input, and from other variables. Based on the usage, it can be found if the variable is (i) Used / Modified/Unused, (ii) constant, (iii) modified multiple times, (iv) modified value being used or not, (v) part of compute result, (vi) part of compute usage, (vii) associated with relation types (>, <, equals), (viii) variable usage scopes, (ix) logic related, and (x) Input/output related. Identifying the variable and its usage happens when establishing the inter block communication and the details of which variable is passed from which block and how the same is used/transformed in the other block is determined. Table 2 below provides an example of the interblock communication based on logical relationship between the blocks.

**Table 2**

| **Type of Statement / Block** | **Description** | **Entry** | **Terminal** | **PRE** | **SUCC** | **UPS** | **DOWN** |
|---|---|---|---|---|---|---|---|
| Entry Block | Refers to the ENTRY Point in which the control reaches the component. | N/A | 1..n | N/A | 1..n | N/A | 1..n |
| | This will not have any Predecessor / UPS blocks within the component | | | | | | |
| Terminal Block | Refers to a statement / block where there is a control Exit | 1..1 | N/A | 1..1 | N/A | 1..n | N/A |
| Predecessor (PRE) | A statement / block that is executed logically before a current block is termed predecessor of the current block | 1..1 | 1..n | 1..1 | 1..n | 1..n | 1..n |
| Successor (SUCC) | A statement / block that is executed logically after a current block is termed predecessor of the current block | 1..1 | 1..n | 1..1 | 1..n | 1..n | 1..n |
| Upstream (UPS) | From a particular statement/block, all the statements / blocks in the hierarchy till the Entry Block other than the immediate predecessor are Upstream | 1..1 | 1..n | 1..n | 1..n | 1..n | 1..n |
| Downstrea m (DOWN) | From a particular statement/block , all the statements / blocks in the hierarchy till the Execution end other than the immediate succcessor are Downsteam | 1..1 | 1..n | 1..n | 1..n | 1..n | 1..n |

At step 210 of the present disclosure, the one or more hardware processors 104 are configured to generate a pseudocode for each of plurality of logical code blocks for each of the plurality of programs for each of the one or more source codes. The pseudocode for each of the plurality of logical code blocks represents a prompt in a natural language that captures contextual information from the one or more source codes pertaining to one or more software applications. The pseudocode generation prepares input for the generative AI model for each block of the one or more source codes. The pseudo code combines knowledge from COBOL analysis along with the business term translation and creates a code flow in natural language. For example, in MOVE IN-CUID TO CUST-ID, value of an input customer id from XYZ physical file is assigned to customer id variable.

Further, at step 212 of the present disclosure, the one or more hardware processors 104 are configured to perform one or more tasks related to the one or more software applications using the pseudocode for each of plurality of logical code blocks inputted to the Gen AI model. In an embodiment, the one or more tasks may include but are not limited to business rules extraction, code summarization, target language code generation, and/or the like. Summary generation or the code summarization is a task that uses output of the present disclosure and feeds the pseudo code generated for each block into the LLM to generate an abstractive summary which explains all the functionality executed in the block. The target language code generation is a task that uses output of the present disclosure and uses functional summary generated to generate an optimal code in a target language. The combination of pseudocode and summary, pseudo code alone, pseudocode amended by a subject matter expert (SME) or summary amended or augmented by SME and similar combinations can be inputs to the LLM to generate the code in target language.

The written description describes the subject matter herein to enable any person skilled in the art to make and use the embodiments. The scope of the subject matter embodiments is defined herein and may include other modifications that occur to those skilled in the art. Such other modifications are intended to be within the scope of the present disclosure if they have similar elements that do not differ from the literal language of the embodiments or if they include equivalent elements with insubstantial differences from the literal language of the embodiments described herein.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g., hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated herein by the following claims.

## Claims

1. A processor implemented method, comprising:
receiving (202), via one or more hardware processors, one or more source codes pertaining to one or more software applications as an input;
analyzing (204), via the one or more hardware processors, the one or more source codes using one or more parser tools to extract a plurality of informative data, wherein the plurality of informative data comprises at least one of (i) a first set of data obtained from a control flow analysis, (ii) a second set of data obtained from a data flow analysis, and (iii) a third set of data obtained from a detailed analysis of one or more statements comprised in each of a plurality of programs of each of the one or more source codes, wherein the plurality of informative data is organized for each of the plurality of programs into a set of persistent data files which are fed back into a database;
translating (206), via the one or more hardware processors, each variable comprised in a specific data file from the set of persistent data files using a deep learning model to a predefined target variable format to obtain a set of translated programs for each of the one or more source codes;
splitting (208), via the one or more hardware processors, each of the plurality of programs for each of the one or more source codes into a plurality of logical code blocks based on a plurality of parameters associated with the plurality of informative data and the set of translated programs such that an inter block communication amongst the plurality of logical code blocks is identified;
generating (210), via the one or more hardware processors, a pseudocode for each of plurality of logical code blocks for each of the plurality of programs for each of the one or more source codes, wherein the pseudocode for each of plurality of logical code blocks represents a prompt in a natural language that captures contextual information from the one or more source codes pertaining to one or more software applications; and
performing (212), via the one or more hardware processors, one or more tasks related to the one or more software applications using the pseudocode for each of plurality of logical code blocks inputted to a generative Artificial intelligence (Gen AI) model.

2. The processor implemented method as claimed in claim 1, wherein the set of persistent data files comprises at least one of a program file, a control flow graph file, a data flow file, a statement file, and a variable file.

3. The processor implemented method as claimed in claim 1, wherein each of the set of persistent data files comprises a specific structure and a plurality of elements in the specific structure, and wherein the specific structure enables capturing one or more properties of the plurality of elements and a relationship amongst the set of persistent data files.

4. The processor implemented method as claimed in claim 1, wherein the inter block communication amongst the plurality of logical code blocks is indicative of a relationship amongst each of the plurality of logical code blocks.

5. The processor implemented method as claimed in claim 4, wherein the relationship amongst each of the plurality of logical code blocks is based on at least one of one or more variable handling scenarios and one or more program structure dependency scenarios.

6. A system (100) comprising
a memory (102) storing instructions;
one or more Input/Output (I/O) interfaces (106); and
one or more hardware processors (104) coupled to the memory (102) via the one or more I/O interfaces (106), wherein the one or more hardware processors (104) are configured by the instructions to:
receive one or more source codes pertaining to one or more software applications as an input;
analyze the one or more source codes using one or more parser tools to extract a plurality of informative data, wherein the plurality of informative data comprises at least one of (i) a first set of data obtained from a control flow analysis, (ii) a second set of data obtained from a data flow analysis, and (iii) a third set of data obtained from a detailed analysis of one or more statements comprised in each of a plurality of programs of each of the one or more source codes, wherein the plurality of informative data is organized for each of the plurality of programs into a set of persistent data files which are fed back into a database;
translate each variable comprised in a specific data file from the set of persistent data files using a deep learning model to a predefined target variable format to obtain a set of translated programs for each of the one or more source codes;
split each of the plurality of programs for each of the one or more source codes into a plurality of logical code blocks based on a plurality of parameters associated with the plurality of informative data and the set of translated programs such that an inter block communication amongst the plurality of logical code blocks is identified;
generate a pseudocode for each of plurality of logical code blocks for each of the plurality of programs for each of the one or more source codes, wherein the pseudocode for each of plurality of logical code blocks represents a prompt in a natural language that captures contextual information from the one or more source codes pertaining to one or more software applications; and
perform one or more tasks related to the one or more software applications using the pseudocode for each of plurality of logical code blocks inputted to a generative Artificial intelligence (Gen AI) model.

7. The system as claimed in claim 6, wherein the set of persistent data files comprises at least one of a program file, a control flow graph file, a data flow file, a statement file, and a variable file.

8. The system as claimed in claim 6, wherein each of the set of persistent data files comprises a specific structure and a plurality of elements in the specific structure, and wherein the specific structure enables capturing one or more properties of the plurality of elements and a relationship among the set of persistent data files.

9. The system as claimed in claim 6, wherein the inter block communication amongst the plurality of logical code blocks is indicative of a relationship amongst each of the plurality of logical code blocks.

10. The system as claimed in claim 9, wherein the relationship amongst each of the plurality of logical code blocks is based on at least one of one or more variable handling scenarios and one or more program structure dependency scenarios.

11. One or more non-transitory machine-readable information storage mediums comprising one or more instructions which when executed by one or more hardware processors cause:
receiving one or more source codes pertaining to one or more software applications as an input;
analyzing the one or more source codes using one or more parser tools to extract a plurality of informative data, wherein the plurality of informative data comprises at least one of (i) a first set of data obtained from a control flow analysis, (ii) a second set of data obtained from a data flow analysis, and (iii) a third set of data obtained from a detailed analysis of one or more statements comprised in each of a plurality of programs of each of the one or more source codes, wherein the plurality of informative data is organized for each of the plurality of programs into a set of persistent data files which are fed back into a database;
translating each variable comprised in a specific data file from the set of persistent data files using a deep learning model to a predefined target variable format to obtain a set of translated programs for each of the one or more source codes;
splitting each of the plurality of programs for each of the one or more source codes into a plurality of logical code blocks based on a plurality of parameters associated with the plurality of informative data and the set of translated programs such that an inter block communication amongst the plurality of logical code blocks is identified;
generating a pseudocode for each of plurality of logical code blocks for each of the plurality of programs for each of the one or more source codes, wherein the pseudocode for each of plurality of logical code blocks represents a prompt in a natural language that captures contextual information from the one or more source codes pertaining to one or more software applications; and
performing one or more tasks related to the one or more software applications using the pseudocode for each of plurality of logical code blocks inputted to a generative Artificial intelligence (Gen AI) model.

12. The one or more non-transitory machine-readable information storage mediums as claimed in claim 11, wherein the set of persistent data files comprises at least one of a program file, a control flow graph file, a data flow file, a statement file, and a variable file.

13. The one or more non-transitory machine-readable information storage mediums as claimed in claim 11, wherein each of the set of persistent data files comprises a specific structure and a plurality of elements in the specific structure, and wherein the specific structure enables capturing one or more properties of the plurality of elements and a relationship among the set of persistent data files.

14. The one or more non-transitory machine-readable information storage mediums as claimed in claim 11, wherein the inter block communication amongst the plurality of logical code blocks is indicative of a relationship amongst each of the plurality of logical code blocks.

15. The one or more non-transitory machine-readable information storage mediums as claimed in claim 14, wherein the relationship amongst each of the plurality of logical code blocks is based on at least one of one or more variable handling scenarios and one or more program structure dependency scenarios.
